# EUROPEAN PATENT APPLICATION

(11) **EP 3 450 225 A1**
(43) Date of publication of application: **06.03.2019**
(21) Application number: 17275138.0
(22) Date of filing: 04.09.2017
(51) Int. Cl.: B60G 3/14, B60G 5/01, B60G 11/16, B60G 11/22, B62D 55/108, F16F 1/54, F16F 3/04, B60G 5/06, F41H 7/00

(54) **SUSPENSION SYSTEM**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

A bias system for a suspension system for a running gear system comprises a first axle arm for attachment to a first wheel of the running gear system, the bias system comprising: a first bias device, the first bias device adapted to resist rotation of the first axle arm about a first pivot point of the running gear system.

## Description

The invention relates to a bias system for a suspension system for a running gear system, a suspension system for a running gear system, a running gear system, a vehicle and a bias device.

Vehicle suspension systems can be complex, with a separate suspension system required for each road wheel. Vehicle suspension systems can also be susceptible to damage (for example, during a blast). Additionally, existing suspension systems can often only resist movement in a single linear direction, and are consequently susceptible to lateral loads.

According to a first aspect of the invention, there is provided a bias system for a suspension system for a running gear system, the bias system comprising a first axle arm for attachment to a first wheel of the running gear system, the bias system comprising: a first bias device, the first bias device adapted to resist rotation of the first axle arm about a first pivot point of the running gear system. When the first running gear system travels over a bump in the ground, the first wheel displaces upwards, which causes the first axle arm to rotate about the first pivot point. Rotation of the first axle arm and, consequently, displacement of the first wheel is resisted. The bias system therefore provides a simple suspension system for resisting upwards displacement of the first wheel. Additionally, in contrast to existing suspension systems (e.g. with linear springs resisting only movement in the same, linear direction), the bias system is less affected by lateral loads on the first wheel.

In one example, the first bias device comprises a casing rotatable about the first pivot point, the casing fixed to the first axle arm. In one example, the first bias device comprises an axial spring located within and fixed to the casing, wherein rotation of the casing about the first pivot point causes displacement of the axial spring so that the axial spring resists rotation of the casing about the first pivot point to resist rotation of the first axle arm about the first pivot point. This arrangement of bias device provides an effective means for resisting rotation. Additionally, having axial spring located within the casing allows the bias system to be sealed and to contain oil or grease to provide damping, and prevents damage to the components located within the casing (for example, during a blast).

In one example, a first end of the axial spring is fixed to the casing, and a second end of the axial spring is fixable to the running gear system at a spring pivot point, so that rotation of the casing about the first pivot point causes rotation of the spring about the spring pivot point to cause displacement of the axial spring. Allowing the spring to rotate in this way prevents twisting of the spring, improving the reliability and consistency of the springs performance in resisting rotation of the first axle arm.

In one example, the axial spring is fixable to the running gear system at the spring pivot point by a spring retention cup, the spring retention cup rotatably fixable to the spring pivot point, wherein the second end of the axial spring retained by the spring retention cup.

In one example, the suspension system comprises a plurality of axial springs.

In one example the running gear system comprises a second axle arm for attachment to a second wheel of the vehicle, and the suspension system comprises: a second bias device, the second bias device adapted to resist rotation of the second axle arm about a second pivot point of the running gear system.

In one example, the second pivot point is at the same location as the first pivot point.

In one example, the first bias device and the second bias device are formed as a single unit.

According to a second aspect of the invention, there is provided a suspension system for a running gear system, the suspension system comprising the bias system of any preceding claim, the suspension system comprising the first wheel, the first wheel attached to the first axle arm.

In one example, the suspension system comprises a second wheel, the second wheel attached to the second axle arm.

According to a third aspect of the invention, there is provided a running gear system for a vehicle, the running gear system comprising a suspension system as described above and a track, wherein the first wheel is coupled to the track so that the first wheel is supported by and rotates with the track in use.

In one example the second wheel is coupled to the track so that the second wheel is supported by and rotates with the track in use.

In one example, the running gear system comprises a connection system fixed to the running gear system, the connection system operable to couple the running gear system to a vehicle body of the vehicle.

In one example, the connection system is configured to at least partially disconnect the running gear system from the vehicle body when a load on the connection system exceeds a threshold. During a blast acting the running gear system, the load acting on the connection system exceeds the threshold, causing the running gear system to at least partially disconnect from the vehicle body. This reduces the load on the suspension system (and other systems within the running gear system and the vehicle body), and helps avoid failure of these systems.

In one example, the load is a torque acting on the connection system. As a blast is likely strike the running gear system at a point which is not aligned with a connection system, it is likely that the blast will result in a torque on the connection system.

In one example, the connection system is configured to permit substantially free relative rotation between the running gear system and the vehicle body when the load exceeds the threshold. This further reduces the load on the suspension system and other systems within the running gear system and the vehicle body.

In one example, the connection system comprises a first member fixed to the running gear system and a second member fixable to the vehicle body, the first member connected to the second member, the first member configured to at least partially disconnect from the second member when the load exceeds the threshold.

In one example, the first member is configured to rotate relative to the second member when the load exceeds the threshold.

In one example, the connection system further comprises a fluid distribution system operable to, during relative rotation between the first member and the second member, pass fluid between the first member and the second member to thereby pass fluid between the body and the running gear system. This means that fluid systems can be located in the vehicle body rather than in the running gear system, with the fluid systems still capable of passing fluid to/from the running gear system from/to the vehicle body when there is relative rotation between the running gear system and the vehicle body (for example, to operate brakes of the running gear system using brake fluid).

In one example, the fluid distribution system comprises a channel between the first member and the second member. In one example, the first member comprises a first port for passing fluid between the fluid channel and the running gear system. In one example, the second member comprises a second port for passing fluid between the fluid channel and the vehicle body.

In one example, the channel is formed in the second member.

In one example, the connection system comprises an o-ring for sealing the channel.

In one example, the second member surrounds the first member.

In one example, the first member is connected to the second member by a shear pin, the shear pin configured to fail when the load exceeds the threshold to at least partially disconnect the running gear system from the vehicle body.

In one example, the connection system further comprises a drive shaft operable to connect a drive system of the vehicle body to a drive train of the running gear system.

In one example, the drive shaft is configured to maintain connection between the drive system of the vehicle body and the drive train of the running gear system when the load exceeds the threshold.

In one example, the running gear system further comprises a brake system, the fluid distribution system adapted to pass fluid between the body and the brake system for use in the brake system.

According to a fourth aspect of the invention, there is provided a vehicle comprising the running gear system described above.

In one example, the vehicle comprises a v-shaped hull for deflecting a blast.

In one example, the vehicle is an unmanned vehicle.

In one example, the vehicle is a military vehicle.

In one example, the vehicle body has a first connector for forming a non-articulated connection with an additional vehicle. This vehicle is advantageous, as the non-articulated connection formed between the vehicle and the additional vehicle means that if one of the vehicle and the additional vehicle is a damaged vehicle (for example, damaged by a blast), the damaged vehicle can be transported to a location for repair by the other of the first vehicle and the second vehicle. The non-articulated connection means that the damaged vehicle can be transported more easily. This vehicle is particularly advantageous after the partial disconnection of the running gear system from the vehicle body, because the non-articulated connection formed between the vehicle and the additional vehicle allows the vehicles to be transported to a location for repair.

In one example, the first connector is located at a rear of the vehicle.

In one example, the first connector is configured to connect to a connector portion so that the vehicle forms the non-articulated connection with the additional vehicle via the connector portion. As described below, the connector portion may comprise a battery for powering the vehicle or the additional vehicle. This means that the battery can be readily replaced simply by replacing the connector portion.

In one example, the first connector is comprised in a main portion of the vehicle body, and the first connector is further configured to connect to a vehicle rear portion.

In one example, the first connector comprises an electrical connection for receiving power from a battery located in the connector portion or the vehicle rear portion.

In one example, the first connector comprises a rail adapted to engage a complementary rail to form the non-articulated connection.

In one example, the vehicle body further comprises a second connector for forming a non-articulated connection with the additional vehicle.

In one example, the second connector is at a front of the vehicle.

In one example, the second connector is comprised in a main portion of the vehicle body, and the second connector is further configured to connect to a vehicle nose portion.

According to a fourth aspect of the invention, there is provided a vehicle system comprising a first vehicle as described above and a second vehicle as described above, the first connector of the first vehicle forming a non-articulated connection with the second connector of the second vehicle. This vehicle system is advantageous, as the non-articulated connection formed between the first vehicle and the second vehicle means that if one of the first vehicle and the second vehicle is a damaged vehicle (for example, damaged by a blast), the damaged vehicle can be transported to a location for repair by the other of the first vehicle and the second vehicle. The non-articulated connection means that the damaged vehicle can be transported more easily.

In one example, the vehicle system comprises a connector portion, the first connector of the first vehicle forming a non-articulated connection with the connector portion, and the second connector of the second vehicle forming a non-articulated connection with the connector portion, so that the first connector of the first vehicle forms the non-articulated connection with the second connector of the second vehicle via the connector portion.

In one example, the connector portion comprises a battery for powering at least one of the first vehicle and the second vehicle.

According to a fourth aspect of the invention, there is provided a bias device comprising: a casing rotatable about a pivot point; and an axial spring located within and fixed to the casing, wherein rotation of the casing about the pivot point causes displacement of the axial spring so that the axial spring resists rotation of the casing about the pivot point.

For a better understanding of the invention reference is made, by way of example only, to the accompanying figures, in which:
FIG. 1 shows a rear view of a vehicle;
FIG. 2 shows a perspective view of a vehicle;
FIG. 3 shows a perspective view and schematic drawings of a bias system and a bias device;
FIG. 4 shows a cut away perspective view of a running gear system;
FIG. 5 shows an exploded perspective view of a vehicle body;
FIG. 6 shows an exploded perspective view of a portion of a vehicle system; and
FIG. 7 shows a perspective view of a vehicle system.

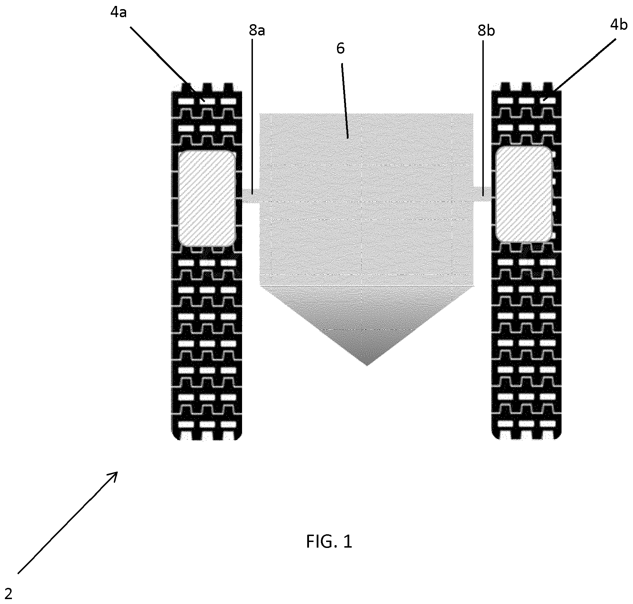

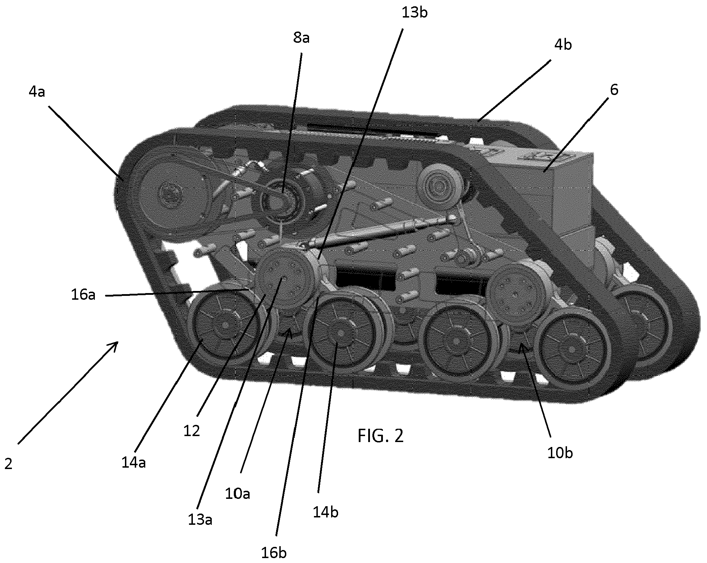

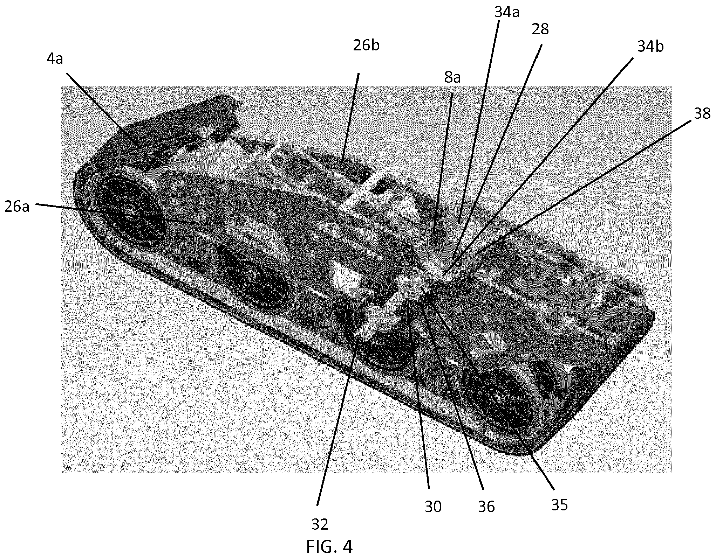

Referring to FIG. 1 and FIG. 2 there is shown a vehicle 2. The vehicle 2 comprises a first running gear system 4a, a second running gear system 4b and a vehicle body 6. The first running gear system 4a is coupled to the vehicle body 6 by a first connection system 8a (described in more detail below with respect to FIG. 4). The second running gear system 4b is coupled to the vehicle body 6 by a second connection system 8b.

The vehicle 2 is a ground based vehicle. Each of the first running gear system 4a and the second running gear system 4a comprises a track for contacting the ground and driving the vehicle 2. The vehicle 2 is an unmanned military vehicle, and comprises a v-shaped hull in its vehicle body 6 for deflecting a blast.

The first running gear system 4a and the second running gear system 4b are located on opposing sides of the vehicle body 6. The second running gear system 4b comprises all of the features of the first running gear system 4a, but is a mirror image of the first running gear system 4a. Similarly, the second connection system 8b comprises all of the features of the first running gear system 4a, but is a mirror image of the first running gear system 4a. Only the first running gear system 4a and first connection system 8a are described here.

The first running gear system 4a comprises a first suspension system 10a and a second suspension system 10b. The second suspension system 10b comprises all of the features of the first suspension system 10a, but is located further towards a rear of the vehicle 2 than the first suspension system 10a. Only the first suspension system 10a is described here.

The first suspension system 10a comprises a bias system 12, a first wheel 14a and a second wheel 14b. The first wheel 14a and the second wheel 14b are road wheels. The bias system 12 comprises a first bias device 13a and a second bias device 13b. The bias system 12 comprises a first axle arm 16a. The first axle arm 16a attaches the first bias device 13a to the first wheel 14a via a first axle. The bias system 12 comprises a second axle arm 16b. The second axle arm 16b attaches the second bias device 13b to a second wheel 14b via a second axle. The first wheel 14a and the second wheel 14b are supported by and rotate with the track in use.

Each of the first axle and the second axle extends substantially horizontally in use. The first axle arm 16a and the second axle arm 16b extend from their respective bias device to their respective axle in a substantially vertical plane in use. The first axle arm 16a and the second axle arm 16b extend from their respective bias device to their respective axle in the plane of the running gear system 4a.

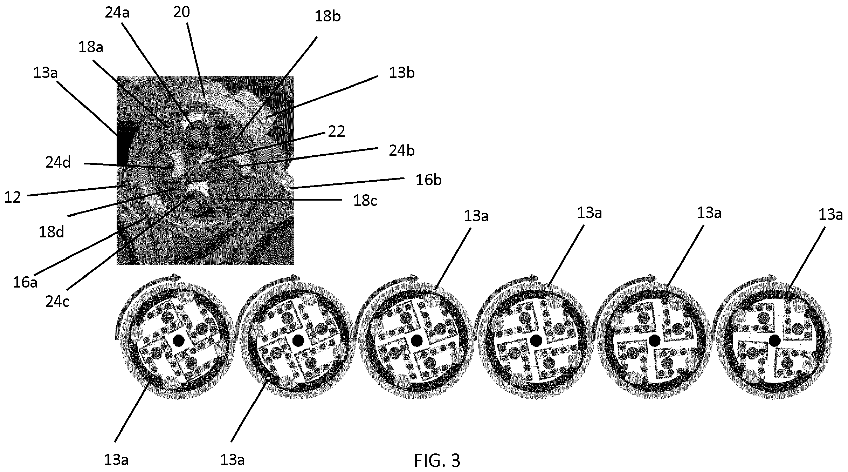

Referring to FIG. 3, there are shown drawings of the bias system 12 and the first bias device 13a. The second bias device 13b comprises all of the features of the first bias device 13a, so only the first bias device 13a is described here.

The first bias device 13a comprises a casing 20. The casing 20 is substantially cylindrical. The first bias device 13a comprises a first axial spring 18a, a second axial spring 18b, a third axial spring 18c and a fourth axial spring 18d. A first end of each of the first axial spring 18a, the second axial spring 18b, the third axial spring 18c and the fourth axial spring 18d is fixed to the casing 20. The first to fourth axial springs 18a-d are substantially evenly spaced around the casing 20. The casing 20 is hollow, and the first to fourth axial springs 18a-d are located entirely within the casing 20. The bias device 13a further comprises a cover portion (see FIG. 2) which seals the first to fourth axial springs 18a-d within the casing 20. The casing 20 is filled with oil. Having the axial springs 18a-d located in the casing 20 protects the axial springs 18a-d from damage (for example, during a blast).

The casing 20 is rotatable about a first pivot point 22. The first pivot point 22 is rigidly fixed to the first running gear system 4a. More specifically, the first pivot point 22 is rigidly fixed to at least one of a first plate (FIG. 4: 26a) and a second plate (FIG. 4: 26b). The casing 20 is attached to the first axle arm 16a. More specifically, the casing 20 is integrally formed with the first axle arm 16a.

A second end of the first axial spring 18a is retained by a first spring retention cup 24a. A second end of the second axial spring 18b is retained by a second spring retention cup 24b. A second end of the third axial spring 18c is retained by a third spring retention cup 24c. A second end of the fourth axial spring 18d is retained by a fourth spring retention cup 24d. Each of the first to fourth spring retention cups 24a-d is rotatably fixed to a spring pivot point. Each spring pivot point is rigidly fixed to the running gear system 4a. More specifically, each spring pivot point is rigidly fixed to at least one of a first plate (FIG. 4: 26a) and a second plate (FIG. 4: 26b). This means that when the casing 20 rotates about the first pivot point 22, it also rotates relative to the spring pivot points.

The casings 20 of the first and second bias devices 13a, 13b are rotatable independently of each other. However, the first and second bias devices 13a, 13b are formed as a single unit, with their casings coaxial and adjacent to each other. This reduces the space required for the bias system 12. The second bias device 13b is located inboard of the first bias device 13a, towards the vehicle body 6. The first and second bias devices 13a, 13b share a common pivot point 22.

In use, as the casing 20 rotates about the first pivot point 22 (as shown in FIG. 3), the first to fourth axial springs 18a-18d rotate about their respective spring pivot points (in the plane of the first running gear system 4a), effecting displacement of the first to fourth axial springs 18a-d. The displacement of the first to fourth axial springs 18a-d causes the springs to produce a force which resists rotation of the casing 20 about the first pivot point 22. The oil located within the casing 20 provides damping to further resist rotation of the casing 20 about the first pivot point 22.

When the first running gear system 4a travels over a bump in the ground, the first wheel 14a displaces upwards, which causes the first axle arm 16a to rotate about the first pivot point 22. As the first axle arm 16a is attached to the casing 20, the rotation of the first axle arm 16a causes rotation of the casing 20, which is resisted by the axial springs 18a-d as described above. This means that rotation of the first axle arm 16a and, consequently, displacement of the first wheel 14a is resisted. The second bias device 13b operates in the same manner with respect to the second axle arm 16b and the second wheel 14b. The bias system provides a simple suspension system for resisting upwards displacement of the first wheel. In contrast to suspension systems with linear springs, the bias system is less affected by lateral loads on the first wheel.

Referring to FIG. 4, there is shown a portion of the first running gear system 4a, providing an exploded view of the first connection system 8a. The first running gear system 4a comprises a first plate 26a and a second plate 26b.

The first connection system 8a comprises a first member 28, which is fixed to the first running gear system 4a. More specifically, the first member 28 is rigidly fixed to a first plate 26a of the first running gear system 4a and a second plate 26b of the running gear system.

The first connection system 8a comprises a second member 30. In use, the second member is fixed to the vehicle body 6. More specifically, the second member is rigidly fixed to the vehicle body 6.

The first member 28 comprises a substantially cylindrical aperture, in which a substantially cylindrical portion of the second member 30 is received. The second member 30 is supported in the first member by a first bearing 34a and a second bearing 34b.

The first connection system 8a comprises a drive shaft 32. The second member 30 comprises a substantially cylindrical aperture, in which the drive shaft 32 is received. The drive shaft is supported in the second member by further bearings 35. The drive shaft 32 connects a motor (not shown) located within the vehicle body 6 to a drivetrain (not shown) of the first running gear system 4a.

A series of shear pins (not shown) couple the first member 28 to the second member 30. The shear pins extend between apertures of the first member 28 and the second member 30, preventing the first member 28 rotating relative to the second member. This means that the first connection system 8a couples the running gear system 4a to the vehicle body 6.

The second member 30 comprises a fluid distribution system. The fluid distribution system comprises a channel 36, which extends fully around the circumference of the second member 30. The second member 30 surrounds the first member 28. The first member 28 comprises a first port (not shown), which aligns with the channel 36. The second member 30 comprises a second port (not shown), which is located within the channel 36. The first connection system 8a comprises a seal 38 which seals the channel 36. The seal 38 is an o-ring located within the channel 36.

The first port is in fluid communication with a brake system (not shown). The second port is in fluid communication with the vehicle body 6. This means that the channel and the first and second ports provide fluid communication between the brake system and the vehicle body 6.

In use, the drive shaft 32 drives the track of the first running gear system 4a via the drivetrain. Brake fluid is passed from the vehicle body 6 to the brake system via the channel 36 of the first connection system 8a to operate brakes (not shown) of the first running gear system 4a.

When a load on the first connection system 8a exceeds a threshold (for example, due to a blast acting on the first running gear system 4a), the first connection system 8a partially disconnects the first running gear system 4a from the vehicle body 6. More specifically, when a torque on the first connection system 8a exceeds a threshold (for example, due to a blast acting on the first running gear system 4a), the first connection system 8a partially disconnects the first running gear system 4a from the vehicle body 6. This is achieved by shearing of the shear pins, which allows substantially free relative rotation to occur between the first member 28 and the second member 30. Allowing rotation in this way reduces the load on the suspension system (and other systems within the running gear system and the vehicle body), and helps avoid failure of these systems. The first bearing 34a and the second bearing 34b continue to support the second member 30 within the first member 28, thereby preventing relative displacement between the first member 28 and the second member 30.

During relative rotation between the first member 28 and the second member 30, the drive shaft 32 continues to connect the motor to the drivetrain, allowing the track of the first running gear system to be driven 4a. During relative rotation between the first member 28 and the second member 30, fluid flow from the first member 28 to the second member 30 continues to be permitted via the channel 36, allowing the brakes to be operated. This means that the track and the brakes of the first running gear system 4a may still be operated while there is relative rotation (for example, after a blast).

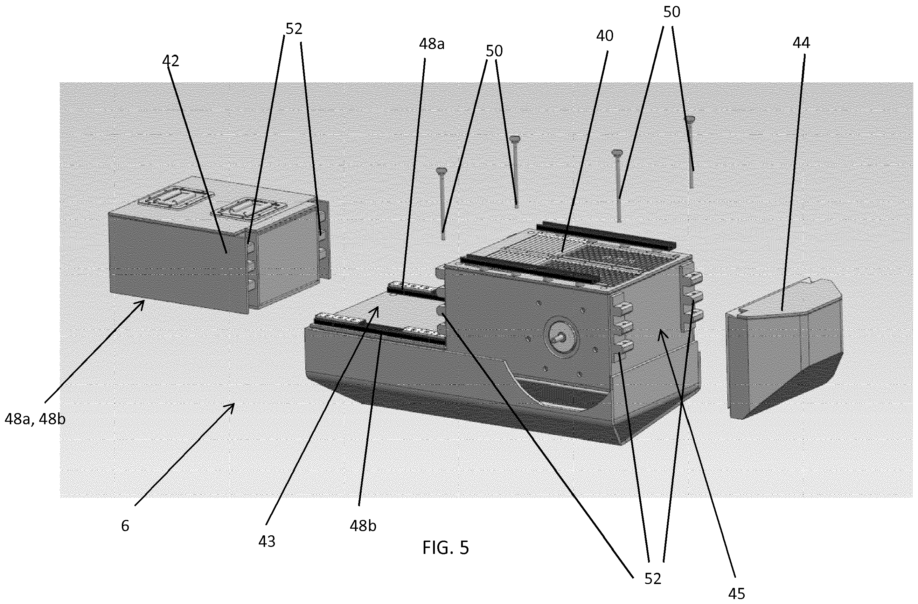

Referring to FIG. 5, there is shown an exploded view of the vehicle body 6. The vehicle body 6 comprises a main portion 40, a vehicle rear portion 42 and a vehicle nose portion 44. The main portion 40 comprises the motor (not shown) and the vehicle rear portion 42 comprises a battery for powering the motor.

The main portion 40 comprises a first connector 43, located at a rear of the main portion 40. The first connector 43 comprises an electrical connection (not shown) for receiving power from the battery. The first connector 43 comprises a pair of first rails 48a 48b. The first connector comprises a pair of pins 50 and a series of loops 52. The vehicle rear portion 42 comprises a pair of second rails (not shown), which are complementary to the first rails 48a 48b. The vehicle rear portion 42 comprises a series of loops 52.

The first connector 43 connects the main portion 40 to the vehicle rear portion 42 using the first rails 48a 48b, which engage with the second rails, and the pins 50, which pass through interlocking loops 52 of the main portion 40 and the vehicle rear portion 42.

The main portion 40 comprises a second connector 45, located at a front of the main portion 40. The second connector 45 comprises a series of loops 52 and a pair of pins 50. The vehicle nose portion 44 comprises a series of loops 52. The second connector 45 connects the main portion 40 to the vehicle nose portion 44 using the pins 50, which pass through interlocking loops of the main portion 40 and the vehicle front portion 42.

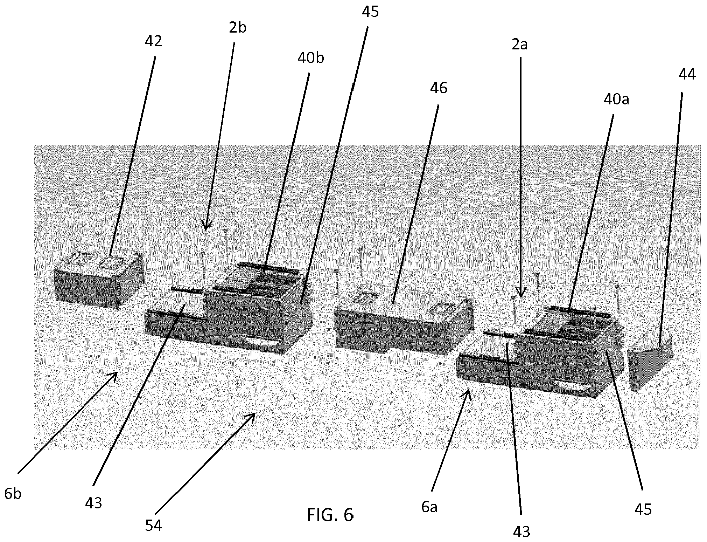

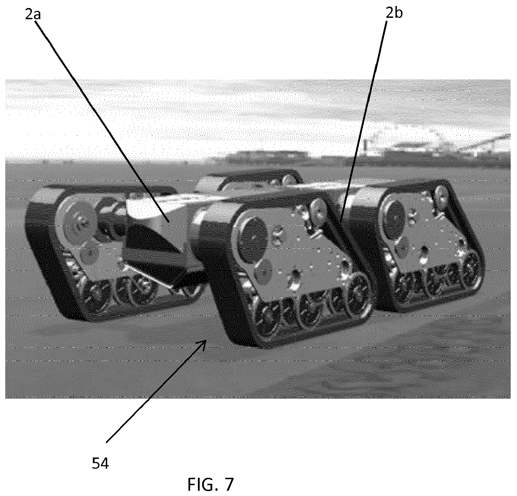

Referring to FIG. 6 and FIG. 7, there is shown a vehicle system 54. The vehicle system 54 comprises a first vehicle 2a and a second vehicle 2b. The first vehicle 2a comprises a first vehicle body 6a, which comprises a main portion 40a and a vehicle nose portion 44, connected together as described above. The second vehicle 2b comprises a second vehicle body 6b, which comprises a main portion 40b and a vehicle rear portion 42, connected together as described above.

The vehicle system 54 further comprises a connector portion 46. The connector portion 46 comprises a battery, for powering the motor of the first vehicle 2a.

The connector portion 46 comprises a pair of second rails (not shown) at a front of the connector portion 46. The pair of second rails of the connector portion 46 is identical to the pair of second rails of the vehicle rear portion 42, as described above. The connector portion 46 comprises series of loops 52 at a rear of the connector portion 46. The series of loops 52 of the connector portion 46 are identical to those of vehicle nose portion 44, as described above.

The connector portion 46 connects to the main portion 40a of the first vehicle 2a via the first connector 43 of the main portion 40a of the first vehicle 2a and the pair of second rails of the connector portion 46. The connector portion 46 connects to the main portion 40a of the second vehicle 2b via the second connector 45 of the main portion 40a of the second vehicle 2b and the series of loops 52 of the connector portion 46. This provides a non-articulated and substantially rigid connection between the first vehicle 2a and the second vehicle body 2b, formed by the first connector 43 of the first vehicle 2a and the second connector 45 of the second vehicle 2b. The electrical connection of the first connector 43 receives power from the battery located in the connector portion 46.

The non-articulated connection formed between the first vehicle and the second vehicle means that if one of the first vehicle and the second vehicle is a damaged vehicle (for example, damaged by a blast), the damaged vehicle can be transported to a location for repair by the other of the first vehicle and the second vehicle. The non-articulated connection means that the damaged vehicle can be transported more easily. The vehicle system 54 is particularly advantageous after the partial disconnection of the running gear system from the vehicle body (as described above) of one of the first vehicle and the second vehicle, as the non-articulated connection formed between the first vehicle and the second vehicle allows the vehicle system to be transported by the other of the first vehicle and the second vehicle to a location for repair.

It will be appreciated that main portion 40, vehicle rear portion 42, vehicle nose portion 44 and connector portion 46 components may be connected together in various different combinations to form different vehicles and vehicle systems. A non-articulated connection might therefore allow a single, rigid system to be formed in a modular (or similar) manner. The non-articulated connection might, in general, mean that a single rigid vehicle system can be easily and conveniently realised. This is in contrast with an articulated connection, which is typically for allowing improved manoeuvrability between bodies. Therefore, it is counterintuitive to connect vehicle bodies in a non-articulated manner.

While the specific form of the first connector 43 described herein is particularly advantageous, it will be appreciated that the first connector could take an alternative form, provided that the first connector of the vehicle is able to form a non-articulated connection with an additional vehicle (for example, via the connector portion and a second connector of the additional vehicle as described above). Additionally, while the specific form of the second connector 45 described herein is particularly advantageous, it will be appreciated that the second connector could take an alternative form, provided that the second connector of the vehicle is able to form a non-articulated connection with an additional vehicle (for example, via the connector portion and a first connector of the additional vehicle as described above).

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A bias system for a suspension system for a running gear system, the bias system comprising a first axle arm for attachment to a first wheel of the suspension system, the bias system comprising:
a first bias device, the first bias device adapted to resist rotation of the first axle arm about a first pivot point of the running gear system.

2. A bias system according to claim 1, wherein the first bias device comprises:
a casing rotatable about the first pivot point, the casing fixed to the first axle arm; and
an axial spring located within and fixed to the casing,
wherein rotation of the casing about the first pivot point causes displacement of the axial spring so that the axial spring resists rotation of the casing about the first pivot point to resist rotation of the first axle arm about the first pivot point.

3. A bias system according to claim 2, wherein a first end of the axial spring is fixed to the casing, and a second end of the axial spring is fixable to the running gear system at a spring pivot point, so that rotation of the casing about the first pivot point causes rotation of the spring about the spring pivot point to cause displacement of the axial spring.

4. A bias system according to claim 3, wherein the axial spring is fixable to the running gear system at the spring pivot point by a spring retention cup, the spring retention cup rotatably fixable to the spring pivot point, wherein the second end of the axial spring retained by the spring retention cup.

5. A bias system according to any of claims 2 to 4, the suspension system comprising a plurality axial springs.

6. A bias system according to any preceding claim, the running gear system comprising a second axle arm for attachment to a second wheel of the vehicle, and the suspension system comprises:
a second bias device, the second bias device adapted to resist rotation of the second axle arm about a second pivot point of the running gear system.

7. A bias system according to claim 6, wherein the second pivot point is at the same location as the first pivot point.

8. A bias system according to claim 6 or 7, wherein the first bias device and the second bias device are formed as a single unit.

9. A suspension system for a running gear system, the suspension system comprising the bias system of any preceding claim, the suspension system comprising the first wheel, the first wheel attached to the first axle arm.

10. A running gear system for a vehicle, the running gear system comprising a suspension system according to claim 9 and a track, wherein the first wheel is coupled to the track so that the first wheel is supported by and rotates as the track rotates in use.

11. A vehicle comprising the biasing system according to claims 1 to 8, the suspension system according to claim 9, or the running gear system according to claim 10.

12. A vehicle according to claim 11, the vehicle comprising a v-shaped hull for deflecting a blast.

13. A vehicle according to claim 11 or 12, wherein the vehicle is an unmanned vehicle.

14. A vehicle according to any of claims 11 to 13, wherein the vehicle is a military vehicle.

15. A bias device comprising:
a casing rotatable about a pivot point; and
an axial spring located within and fixed to the casing,
wherein rotation of the casing about the pivot point causes displacement of the axial spring so that the axial spring resists rotation of the casing about the pivot point.
